# EUROPEAN PATENT APPLICATION

(11) **EP 4 379 441 A1**
(43) Date of publication of application: **05.06.2024**
(21) Application number: 23000171.1
(22) Date of filing: 27.11.2023
(51) Int. Cl.: G02B 6/52, H02G 1/08

(54) **DEVICE FOR INSERTING A CABLE INTO A CONDUIT AND METHOD OF INSERTING THE CABLE INTO THE CONDUIT**

(30) Priority: 29.11.2022 PL 44297522
(71) Applicant: Krzyzek, Radoslaw, 30-611 Kraków (PL)
(72) Inventor: Krzyzek, Radoslaw, 30-611 Kraków (PL)

(57) **Abstract**

The subject of the invention is a device for inserting a cable (6) into a conduit (7) comprising a body (1) in which a cable feeder (2) is embedded, and a blowing head (3) attached to the body (1). The feeder comprises a drive wheel (20) with a carrying surface (21) along which the cable (6) is guided to the blowing head (3) and at least one hold-down wheel (22) which holds the cable (6) tight to the carrying surface of the drive wheel (20) so that a wrap angle α of the carrying surface (21) by the cable (6) is equal to or greater than 3°. The invention relates also to a method of inserting a cable into a conduit using a device in accordance with the invention.

## Description

### Technical field

The subject of the invention is a device for inserting a cable into a conduit, in particular a fibre optic cable. The invention also relates to a method of inserting the cable into the conduit by means of an apparatus of the invention.

### Background

The insertion of the fibre optic cable into the conduit is normally carried out by combining mechanical moving of the cable and blowing it into the conduit. The cable is moved into the conduit using a conveyor. This can be a roller conveyor or a belt conveyor. Blowing the cable involves supplying a pressurised medium to the chamber in which the cable is placed. The medium, introduced into the chamber under high pressure, moves towards the conduit where the pressure is lower. This medium may be a liquid or a gas. The friction created between the air or liquid molecules and the surface of the cable pulls the cable in the direction in which the medium moves. In addition, due to the pressure generated between the cable and the inner conduit walls, the cable floats inside the conduit. The combination of the mechanical movement of the cable and the blowing of the cable allows it to be inserted into the conduit over long distances..

From the Polish patent PL.237502 B1 is known a device for inserting a fibre optic cable into a telecommunication duct, which is composed of a mechanical fibre optic cable feeder equipped with a three-phase electric motor, a worm gear and a pair of active rollers driving belts pushing the fibre optic cable, as well as a blowing air pressure sensor and a counter of the length of the inserted cable with a display. The unit has an associated switchgear with a cable feeder, an expandable blow-in head connected to the blow-in air pressure sensor.

US patent application US2009166597A1 discloses a device for installing optical fibre. The fiber optic installation device includes a housing having a channel passing therethrough to receive the fiber. A drive wheel may be rotatably positioned within the housing and configured to rotatably couple to an optical fibre located within the fibre receiving conduit. The housing may comprise an air path for supplying a first flow of compressed air from the air source to the drive wheel. The first flow of compressed air may cause the drive wheel to rotate and drive the optical fibre through the optical fibre receiving conduit.

GB2584164A shows a tool for inserting a fibre optic cable into a duct, conduit or pipeline. A main body comprises a fibre receiving channel, a drive wheel and bearing surface, which may be a slave wheel mounted to the body, such that a length of optical fibre cable extends through the channel and between drive wheel and bearing surface. A trigger allows user to adjust the speed, electronically, at which optical fibre cable is fed out, via end, from the tool which is fed from a reel of optical fibre cable on spindle. A removable cover, mates to main body to allow access to channel. The drive wheel or the slave wheel may have a band of polymeric material on its rim deformable by the optical cable. The slave wheel is preferably movable, and biased, to allow cable to be inserted and then aligned to channel.

From Chinese patent application CN111667952A is known a blowing device for power cable processing. The blowing device comprises a rack, a blowing base, a blowing gland, a locking bolt, a blowing inner pipe, a heating piece, an air conveying pump, an auxiliary exhaust port, a directional conveying device and a buffer guide mechanism. According to the invention, the directional conveying device is arranged; a cable to be blown can be guided through cooperation of the first conveying belt and the second conveying belt, so that the offset of the cable is prevented; meanwhile, under the driving of a driving motor, the transmission of the second conveying belt can be driven, the cable can be guided and conveyed; the distance between the first conveying belt and the second conveying belt can be adjusted by an arranged distance adjusting mechanism so as to adapt to cables of different sizes, so that the cable blowing quality and efficiency are improved; and through the arrangement of the buffer guide mechanism and the cooperation of two lower guide wheels and two upper guide wheels, the cable can be rotated and guided in advance before being blown, so that the cable is not pulled, the stress is reduced, and the blowing quality and efficiency are improved.

A problem that can arise when inserting the cable into the conduit is the loss of cable adhesion on the drive wheel. Solutions known from the state of the art solve this problem by using conveyor belts. However, this solution is more complicated and costly compared to the use of a single drive wheel. This is because it requires the use of additional wheels in addition to the drive wheel and at least one belt.

Therefore, it is expedient to provide a device for inserting a cable into a conduit which would be free from the above-mentioned drawbacks.

### Summary of the invention

An object of the invention is a device for inserting a cable into a conduit comprising a body in which a cable feeder is embedded, and a blowing head attached to the body receiving the cable from the cable feeder. The device is characterised in that the cable feeder comprises a drive wheel with a carrying surface along which the cable is guided to the blowing head, and at least one hold-down wheel which holds the cable tight to the carrying surface of the drive wheel so that a wrap angle α of the carrying surface by the cable is equal to or greater than 3°.

Preferably, the wrap angle α of the carrying surface by the cable is from 45 to 370°.

Preferably, the hold-down wheel is attached to a lever connected pivotally to the body.

Preferably, the device comprises two levers. At least one hold-down wheel is attached to each of the lever.

Preferably, the hold-down wheels are mounted on a swingarm, which is attached to the lever.

Preferably, the device comprises a lubrication system located between the feeder and the blowing head.

Preferably, the blowing head comprises a lip seal located at a cable inlet opening to a pressure chamber. The lip seal comprises a depression on its outer side located at the edge of an aperture.

Preferably, the carrying surface of the drive wheel comprises a guide groove.

Preferably, the drive wheel is powered by an electric motor via an bevel gearbox.

Preferably, the device comprises a system for detecting cable slip on the carrying surface that compares the speed of the drive wheel and the hold-down wheel.

It is yet another object of the invention to provide a method of inserting a cable into a conduit using a device in accordance with the invention. A cable is guided along the carrying surface of the drive wheel in such a way that the wrap angle α of the carrying surface by the cable is equal to or greater than 3°. The end of the cable is introduced into the blowing head through a lubrication system and then through a lip seal located at the inlet opening of the pressure chamber, and is further passes to the conduit attached at the outlet opening of the blowing head. The drive wheel is then set in motion and a pressurised medium is introduced into the blowing head, which, as a result of the friction of the medium particles against the cable, moves the cable towards the outlet opening of the blowing head and leads it into the conduit. According to the invention, the cable is lubricated with a friction-reducing medium after it leaves the carrying surface and before it is introduced into the blowing head.

Preferably, a liquid or a gas is used as the medium.

The use in the device according to the invention the wrap angle of the drive wheel by the cable greater than 0° brings the cable into contact with the carrying surface over a longer distance, which in turn increases its adhesion to this surface. This significantly reduces the risk of the cable slipping on the carrying surface, which results in an increased range over which the cable can be inserted into the conduit. The use of the drive wheel as an element that moves the cable instead of a conveyor belt makes the drive element not complicated. There is no need for the use of a transmission belt and pulleys. At the same time, the increased wrap-around angle enables a carrying surface similar to that obtained with belt conveyors. The use of a drive wheel also makes it easy to control the length of the cable in contact with the carrying surface through increasing the wrap angle.

Mounting the hold-down wheels on pivoting levers allows the cable to be easily inserted onto the drive wheel's carrying surface. The levers with the hold-down wheels are pivoted to In order to gain access to the carrying surface of the drive wheel, the levers with the hold-down wheels are pivoted.

The use of a lip seal at the inlet opening to the blowing head prevents the cable pushing medium from moving in the direction of the drive wheel and moving back the cable. The seal causes the medium in the pressure chamber to move only to the inside of the casing tube pushing the cable. This increases the range over which the cable can be inserted into the conduit. Increasing the force with which the cable is introduced into the blowing head as a result of increasing the contact area between the cable and the carrying surface can result in the cable rippling before entering the blowing head, so that the axis of the cable and the axis of the inlet opening to the blowing head do not align, which in turn can result in leaks between the seal and the cable. By using a lip seal, the axis of the aperture of the seal aligns with the axis of the cable, so that the 'lips' of the seal adhere to the surface of the cable at all times.

The seal at the inlet opening to the blowing head increases the resistance to the cable entering it. In order to reduce this resistance and the losses resulting therefrom, the device according to the invention uses a cable lubrication system located in front of the seal. A depression located at the edge of the aperture of the seal collects excess lubricant from the cable surface, while distributing it evenly around the circumference of the cable. The increased resistance generated by the seal clamping on the cable surface as a result of the pressure inside the blowing head is overcome by the increased force with which the cable is moved through the feeder.

### Brief description of drawings

The present invention will be presented in preferred embodiments with reference to the enclosed figures, in which:
Fig. 1 depicts the device according to the invention with two hold-down wheels fixed to the lever in an axonometric view;
Fig. 2 depicts in a side view the device with two hold-down wheels fixed to the lever;
Fig. 3 depicts in a longitudinal cross-sectional view the device with two hold-down wheels attached to the lever;
Fig. 4 depicts the device with four hold -down wheels attached to two levers in an axonometric view;
Fig. 5 depicts, in side view, a device with four hold-down wheels attached to two levers;
Fig. 6 depicts in a longitudinal cross-sectional view a device with four hold-down wheels attached to two levers;
Fig. 7 depicts a lip seal in a cross-sectional view;
Fig. 8 depicts the cable wrapping around the drive wheel at an angle of 45°;
Fig. 9 depicts the cable wrapping around the drive wheel at an angle of 370°.

### Detailed description of the preferred embodiments of the invention

### Example 1

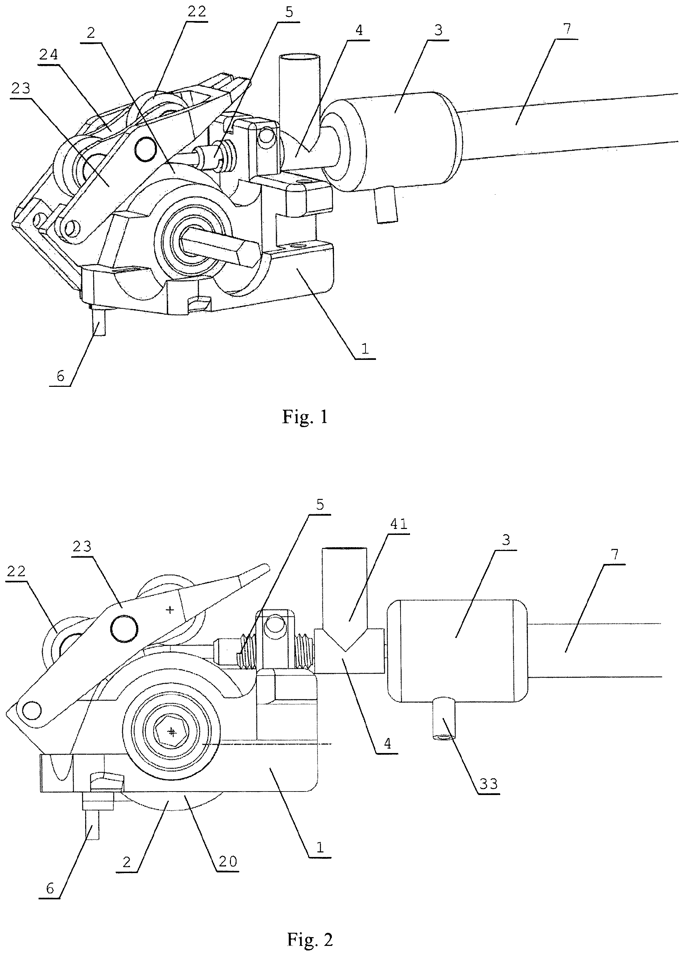

The device for inserting the cable into the conduit in the first embodiment is shown in fig. 1, fig. 2, fig. 3. According to the invention, the device comprises a body 1 in which the cable feeder 2 for the cable 6 is embedded. The body 1 can be made of metal or plastic. It can be made, depending on the material from which it is made, by machining, by additive techniques (3D printing) or by plastic injection moulding.

The feeder 2 is used to move the cable 6 and insert it into the blowing head 3. According to the invention, the feeder 2 comprises a drive wheel 20 with a carrying surface 21 along which the cable 6 is guided to the blowing head. The friction that exists between the supporting surface 21 and the cable 6 causes the rotational movement of the drive wheel 20 to push the cable towards the blowing head 3. On the carrying surface 21 there is a guide groove (not shown). This groove facilitates guiding the cable, preventing the cable from sliding off the carrying surface 21. In the first embodiment, the feeder 2 also has two hold-down wheels 22 designed to hold the cable 6 tight to the carrying surface 21 of the drive wheel 20.

The drive wheel 20 can be powered by a dedicated electric motor or by a battery-powered screwdriver. The torque from these sources can be supplied to the drive wheel 20 directly or via a gearbox, such as an bevel gearbox. The use of bevel gearing makes the device according to the invention with an attached drive source for the drive wheel 20 compact, Due to its small dimensions, it can be hand-held by the user during use. Thus, it is not necessary to use stands to support the device. The use of a battery-powered screwdriver as the drive source for the drive wheel makes the device highly mobile - it is not limited by access to AC power. Secondly, the lack of a dedicated electric motor makes the device cheaper to produce.

In accordance with the invention, the hold-down wheels 22 hold the cable 6 tight to the carrying surface 21 of the drive wheel 20 in such a way that the wrap angle α of the carrying surface 21 by the cable 6 is at least 3°. In the present embodiment, the wrap angle α is 90°. Increasing the wrapping angle of the carrying surface 21 by the cable 6 results in a larger contact surface, between the carrying surface 21 of the drive wheel and the cable. This, in turn, increases the friction between these components, which translates into an increase in the force with which the cable 6 is moved through the feeder 2, and prevents it from slipping.

The hold-down wheels 22 are attached to the lever 23 connected pivotally to the body 1. By means of this hinged connection to the body 1, the lever 23 can be pivoted so that the hold-down wheels 22 can be moved away from the support surface 21. This provides easy access to the carrying surface 21, e.g. for manually guiding the cable 6 over the drive wheel 20 when it is inserted into the blowing head 3. The pivotable connection between the lever 23 and the body 1 is provided by a pin connection. The pin is secured by a nut. Tightening the nut allows the lever 23 to be locked in the selected position. The fixing of the hold-down wheels 22 on the movable lever, the position of which can be freely determined, makes it possible to regulate the force with which the hold-down wheels 22 hold the cable 6 in relation to the carrying surface 21 of the drive wheel 20. The hold-down wheels 22 are fixed to the swingarm 24, which is attached to the lever 23. In this way, the position of the hold-down wheels 22 adjusts to the part of the cable 6 that girds the carrying surface 21.

According to the invention, the device for inserting the cable into the conduit 7 comprises a blowing head 3 which, using a pressurised medium, pushes the cable 6 into the inside of the conduit. The cable 6 is inserted through an inlet opening 31 into a pressure chamber 30 located in the head. The high-pressure medium located in the pressure chamber 30 moves towards a lower-pressure location, which is inside the conduit 7 located at the outlet opening 32. The medium moving into the interior of the conduit 7 moves the cable 6 towards the outlet opening 32 as a result of the friction of its particles against the surface of the cable 6. In the example embodiment, air is used as the medium introduced into the pressure chamber 30. Alternatively, a liquid, e.g. water, or other fluids may be used as the medium.

The blowing head 3 includes a stub pipe 33, which is intended for feeding the medium into the pressure chamber 30. Inside the pressure chamber 30, there is a sleeve 34 extending between the inlet opening 31 and the outlet opening 32. The function of the sleeve 34 is to guide the cable 6 inside the blowing head 3 from the inlet opening 31 to the outlet opening, so that the cable not to bend as a result of the pushing force coming from the feeder 2. The cable 6 is guided inside the sleeve 34. Accordingly, its inner diameter is adjusted so that the cable 6 fits freely in it at the same time without any clearance causing it to bend. Between the sleeve 34 and the outlet opening 32, there is a gap through which the medium escapes from the blowing head 3 into the casing tube 7.

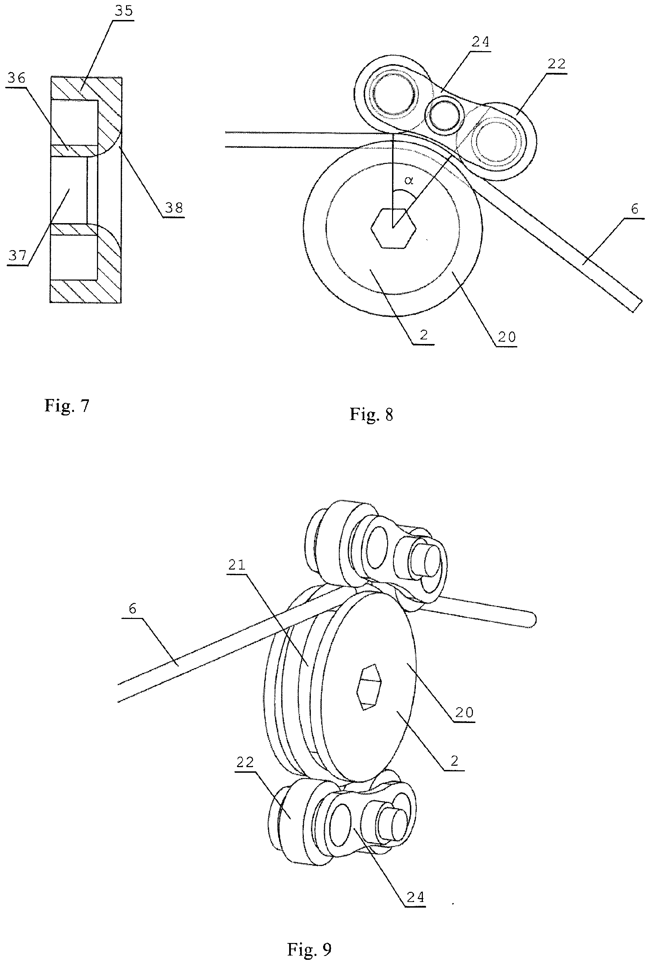

According to the invention, there is a lip seal 35 at the entrance of the pressure chamber 30, which is shown in fig. 7. It is deposited in the inlet opening 31. The function of the seal 35 is to prevent the medium from leaking out of the pressure chamber 30 through the inlet opening 31, thereby pushing back cable 6 towards the feeder. By using the seal 35, all of the medium entering the pressure chamber 30 is directed towards the exit opening 32. As a result of the pressure inside the pressure chamber 30, the lip 36 around the aperture 37 of the seal engages around the cable 6. The large contact area of the lip 36 with the cable 6 around its circumference means that the connection remains sealed, even when the axis of the cable 6 does not coincide with the axis of the inlet opening 31 of the blowing head 3, as a result of bending of the cable. The lip 36 adheres tightly to the surface of the cable, so that the axis of the opening in the seal 35 coincides with the axis of the cable 6 even during waving of the cable 6. By waving, it is to be understood that the cable bends as it enters the pressure chamber 30. This bending may be due to the resistance encountered by the cable 6 pushed by the feeder 2 as it passes through the seal 35. According to the invention, the seal 35 comprises a depression 38 at the edge of the opening 37. The depression 38 is located on the outer side of the seal 35, around the periphery of the opening 37. The depression has the form of a rounded edge of the opening 37.

The device according to the invention includes a lubrication system 4 located behind the feeder 2 and in advance of the blowing head 3. The lubrication system 4 has the form of a sleeve 40 with an inner diameter larger than the diameter of the cable 6, to which is attached a ferrule 41 with a valve adapted to cooperate with typical lubricators. Lubricant is introduced through the ferrule 41 into the interior of the sleeve 40, where it is evenly distributed on the surface of the cable 6. The function of the lubrication system 4 is to lubricate the surface of the cable, and indirectly to lubricate the seal 35. The lubricant is applied in the lubrication system 4 to the surface of the cable 6, after which the excess lubricant is collected from the surface of the cable by the seal 35. It accumulates in the depression 38. This ensures that the lubricant is constantly at the entrance to the aperture 37 providing lubrication to the inner surface of the lip 36. The purpose of lubricating the cable surface and the inner surface of the lip 36 in the seal 35 is to reduce friction between the seal and the cable 6 as it enters the pressure chamber 30.

In the example embodiment, the device comprises a sleeve 5 embedded in the body 1, which is designed to guide the cable 6 from the feeder 2 to the lubrication system 4. The cable 6, after leaving the carrying surface 21, is introduced into the interior of the sleeve 5, after which it enters the lubrication system 4 and further into the blowing head 3.

According to the invention, the device comprises a system for detecting cable slip 6 on the carrying surface 21, which compares the rotational speed of the drive wheel 20 and the hold-down wheels 22. The function of the system is to check whether the cable 6 is slipping on the carrying surface 21 of the drive wheel 20, which indicates that the cable 6 is not being inserted into the conduit 7 with optimum performance. The system (not shown) comprises an encoder counting the rotations of the drive wheel 20, an encoder counting the rotations of one of the hold-down wheels 20 and an electronic circuit with a microcontroller calculating from the data from the encoders whether the cable 6 between the drive wheel 20 and the hold-down wheel is moving at the correct speed, i.e. the speed resulting from the number of rotations of the drive wheel 20 and the hold-down wheel 22.

### Example 2

In the second embodiment example, the device for inserting the cable into the conduit has a body 10 which, as in the first embodiment, can be made of metal or plastic by the same methods. Embedded in the body 10 is a cable feeder 2 of the cable 6, which 2 comprises a drive wheel 20 with a supporting surface 21 along which the cable 6 is guided to the blowing head. The drive wheel 20 is the same as in the first embodiment. It can be driven either by a dedicated electric motor or by a battery-powered screwdriver.

The device in the second example embodiment differs from the first embodiment in that it has eight hold-down wheels 22 attached four to each of the two levers 230. The levers 230, like the lever 23 in the first embodiment, are pivotally attached to the body 10. Due to the hinged connection, they can be pivoted so that the hold-down wheels 22 are moved away from the drive wheel 20 providing access to the carrying surface 21. The hold-down wheels 22 are fixed to the levers 230 via the swingarms 240. In this example embodiment, the hold-down wheels 22 hold the cable 6 which wraps the carrying surface 21 of the drive wheel 20 at the angle α of 170°.

In other aspects, the device in the second embodiment has the same technical features as in the first embodiment..

An object of the invention is also a method of inserting a cable into a conduit by means of the device described in the first or second embodiments..

According to the invention, the cable 6 to be inserted into the conduit 7 is guided along the carrying surface of the drive wheel in such a way that the wrap angle α of the carrying surface by the cable 6 is equal to 45°. In order to obtain such a wrap angle α, the cable 6 is hold down to the supporting surface 21 of the drive wheel 20 by means of two hold down wheels 22 attached to one lever 23.

The cable 6 is guided through the sleeve 5, the lubrication system 4 and the lip seal 35 into the blowing head 3 and further into the conduit 7 which is mounted at the head exit.

Once the end of the cable 6 is inserted into the conduit 7, a dedicated electric motor or a battery-powered screwdriver is started, putting the drive wheel 20 into motion. At the same time, a pressurised medium is introduced into the pressure chamber 30 located in the blowing head 3, which, as a result of the friction of the medium particles against the cable 6, moves it towards the outlet opening of the blowing head and leads it into the conduit. In the embodiment of the invention, air introduced into the pressure chamber by means of a compressor is used as the medium.

According to the invention, the cable 6 is lubricated with a friction-reducing medium after it leaves the carrying surface 21 and before it is fed into the blowing head 3. An excess of lubricant from the surface of the cable 6 is collected by the seal 35 and accumulates in the depression 38. In this way, the lubricant is constantly at the entrance to the aperture 37 providing lubrication to the inner surface of the lip 36. The lubrication of the cable surface and the lip 36 of the seal reduces the friction occurring between the seal and the cable 6, thereby reducing the resistance that the seal 35 causes to the cable 6.

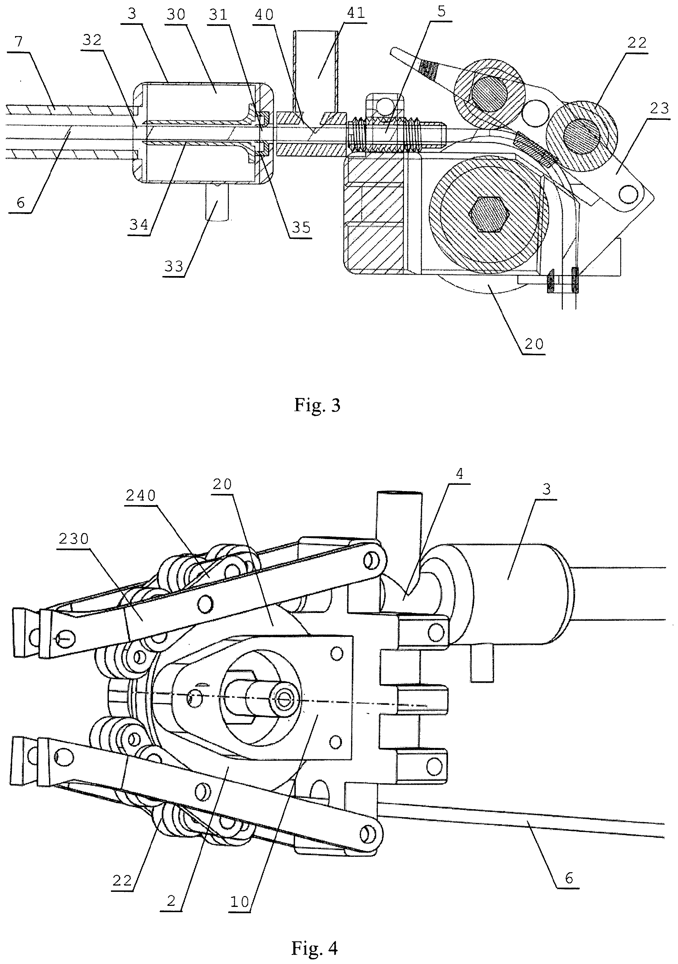

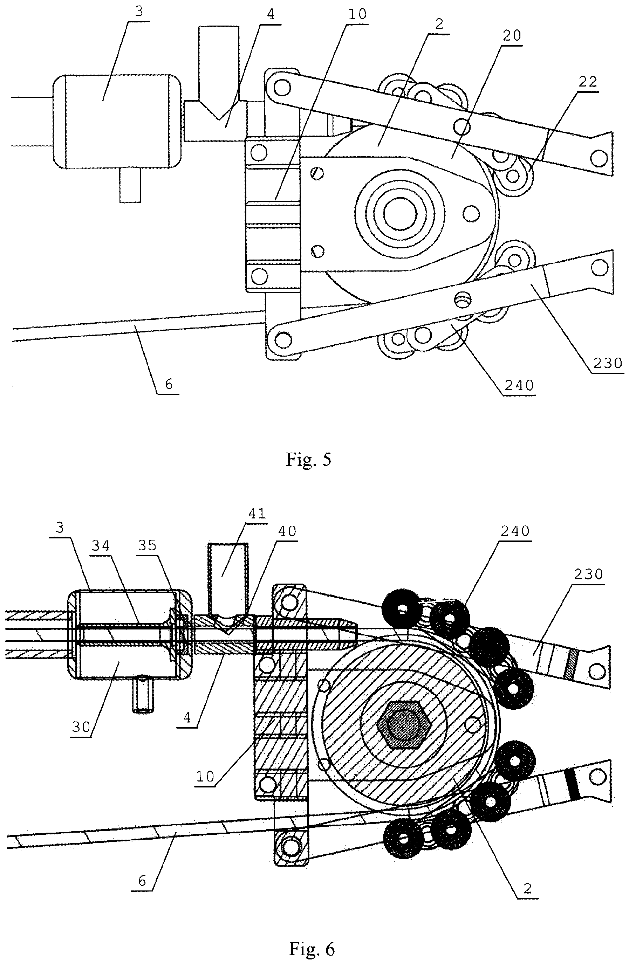

According to the invention, the wrap angle of the carrying surface 21 by the cable 6 is at least 3°. In the embodiment of a device comprising two hold-down wheels 22 attached to a single lever 23, shown in figs. 1, 2, 3 this angle is 90°, or 170° in a device with four pressure wheels attached to two arms, as shown in figs. 4, 5, 6. The wrap angle α can be chosen freely. For example, it can be 45° as illustrated in fig. 8 or 370° as shown in fig. 9. The angle at which the cable 6 wraps around the carrying surface 21 depends on the angle between the tangent at the point where the cable overlaps the carrying surface of the drive wheel and the tangent at the point where the cable 6 leaves the carrying surface of the drive wheel. The aim of the hold-down wheels 22 in the device according to the invention is to hold the cable in such a way that the wrap angle α is not less than 3°, while at the same time the cable 6 adheres to the supporting surface 21 on the curve of the drive wheel 20 defined by the angle α.

## Claims

1. A device for inserting a cable into a conduit comprising a body in which a cable feeder is embedded, and a blowing head attached to the body receiving the cable from the cable feeder **characterised in that** the feeder (2) of the cable (6) comprises a drive wheel (20) with a carrying surface (21) along which the cable (6) is guided to the blowing head (3), and at least one hold-down wheel (22) which holds the cable tight to the carrying surface (21) of the drive wheel (20) so that a wrap angle α of the carrying surface (21) by the cable (6) is equal to or greater than 3°.

2. The device according to claim 1, **characterised in that** the wrap angle α of the carrying surface (21) by the cable (6) is from 45 to 370°.

3. The device according to claim 1 or 2 **characterised in that** the hold-down wheel (22) is attached to a lever (23) connected pivotally to the body (1).

4. The device according to claim 3, **characterized in that** it comprises two levers (230), wherein at least one hold-down wheel (22) is attached to each of the lever (230).

5. The device according to claim 3 or 4, **characterised in that** the hold-down wheels (22) are mounted on a swingarm (24), (240), which is attached to the lever.

6. The device according to any claim 1-5, **characterised in that** it comprises a lubrication system (4) located between the feeder (2) and the blowing head (3).

7. The device according to any claim 1-6, **characterised in that** the blowing head (3) comprises a lip seal (35) located at a cable (6) inlet opening (31) to a pressure chamber (30).

8. The device according to claim 7, **characterised in that** the lip seal (35) comprises a depression (38) on its outer side located at the edge of an aperture (37).

9. The device according to any claim 1-8, **characterised in that** the carrying surface (21) of the drive wheel (20) comprises a guide groove.

10. The device according to any claim 1-9, **characterised in that** the drive wheel (20) is powered by an electric motor via an bevel gearbox.

11. The device according to any claim 1-10, **characterised in that** it comprises a system for detecting cable slip on the carrying surface (21) that compares the speed of the drive wheel (20) and the hold-down wheel (22).

12. A method of inserting a cable into a conduit using a device according any claim 1-11, **characterised in** the following steps:
a cable is guided along a carrying surface of a drive wheel in such a way that a wrap angle α of the carrying surface by the cable is equal to or greater than 3°,
an end of the cable is introduced into a blowing head through a lubrication system, and then through a lip seal located at an inlet opening of a pressure chamber, and is further passes to the conduit attached at the outlet opening of the blowing head, then the drive wheel is set in motion and a pressurised medium is introduced into the blowing head, which, as a result of the friction of the medium particles against the cable, moves the cable towards the outlet opening of the blowing head and leads it into the conduit,
the cable is lubricated with a friction-reducing medium after it leaves the carrying surface and before it is introduced into the blowing head.

13. The method according to claim 12 **characterised in that** a liquid is used as the medium.

14. The method according to claim 13 **characterised in that** a gas is used as the medium.
